# EUROPÄISCHE PATENTSCHRIFT

(11) **EP 1 247 090 B1**
(45) Veröffentlichungstag und Bekanntmachung des Hinweises auf die Patenterteilung: **27.07.2011**
(21) Anmeldenummer: 00993740.0
(22) Anmeldetag: 14.12.2000
(51) Int. Cl.: G01N 27/407

(54) **Gassensor, insbesondere Lambda-Sonde**
Gas sensor, expecially a lambda sensor
Détecteur de gaz, notamment sonde lambda

(30) Priorität: 29.12.1999 DE 19963566
(43) Veröffentlichungstag der Anmeldung: 09.10.2002
(73) Patentinhaber: ROBERT BOSCH GMBH, 70442 Stuttgart (DE)
(72) Erfinder: SCHEER, Heiner, 89180 Berghuelen (DE); WIEDENMANN, Hans-Martin, 70195 Stuttgart (DE); HICKL, Josef, 74321 Bietigheim-Bissingen (DE); WAHL, Thomas, 75172 Pforzheim (DE); SCHNEIDER, Gerhard, 96175 Pettstadt (DE); RENZ, Hans-Joerg, 70771 Leinfelden-Echterdingen (DE); NEUMANN, Harald, 71739 Oberriexingen (DE); DIEHL, Lothar, 70499 Stuttgart (DE); KARLE, Jürgen, 71277 Rutesheim (DE)
(86) Internationale Anmeldenummer: PCT/DE2000/004472
(87) Internationale Veröffentlichungsnummer: WO 2001/050118

(56) Entgegenhaltungen:
- US-A- 4 824 549
- US-A- 5 314 604
- US-A- 5 421 984

## Beschreibung

### Stand der Technik

Die Erfindung bezieht sich auf Gassensoren, insbesondere Lambda-Sonden, mit als gesintertes Keramiklaminat ausgebildetem Körper und darin innerhalb einer Schicht des Laminates angeordnetem Referenzluftkanal, auf dessen einer Seite eine im Laminat angeordnete bzw. eingebettete elektrische Widerstandsheizung und auf dessen anderer Seite eine Elektrodenanordnung vorgesehen ist, welche zumindest eine innenseitig einer Begrenzungswand des Referenzluftkanales angeordnete, zumindest bereichsweise für Gase permeable Referenzelektrode und eine vom zu sensierenden Gas beaufschlagte Nernst-Elektrode aufweist, die ebenfalls zumindest bereichsweise für Gase permeabel ausgebildet und von der Referenzelektrode durch eine für Ionen, insbesondere Sauerstoff-Ionen, leitfähige und permeable Festelektrolytschicht getrennt ist.

Abgassystem moderner Verbrennungsmotoren sind insbesondere bei Kraftfahrzeugen heute regelmäßig mit Katalysatoren zur katalytischen Zerlegung schädlicher Abgase versehen. Für eine gute Funktion der Katalysatoren ist es notwendig, daß dem Motor Luft und Kraftstoff in einem vorgegebenen Verhältnis zugeführt wird. Die dafür vorgesehenen Motorsteuerungen sind auf ihrer Eingangsseite mit einer sogenannten Lambda-Sonde verbunden, deren Signale die Zusammensetzung der Abgase wiedergeben und damit der Motorsteuerung ermöglichen, das Verhältnis von Kraftstoff und Verbrennungsluft in einer für den Katalysator optimalen Weise einzuregeln.

In diesen Zusammenhang sind zwei Konzepte bekannt.

Bei dem einen Konzept wird eine stöchiometrische Verbrennung angestrebt, d.h. die Sauerstoffmenge in der Verbrennungsluft entspricht genau dem Sauerstoffbedarf für eine vollständige Verbrennung des zugeführten Kraftstoffes. Der Betrieb des Motors erfolgt also weder mit Sauerstoffüberschuß (λ > 1) noch mit Sauerstoffunterschuß (λ < 1) vor. Diese Betriebsweise kann dementsprechend durch λ = 1 charakterisiert werden.

Für diese stöchiometrische Verbrennung genügen bei der Abgassensierung schmalbandig arbeitende Lambda-Sonden, bei denen die Nernst-Elektrode weitestgehend unmittelbar vom Abgas beaufschlagt wird.

Hier wird von der Motorsteuerung der Effekt ausgenutzt, daß eine zwischen der Referenzelektrode und der Nernst-Elektrode abgreifbare, durch Diffusion von Sauerstoff-Ionen erzeugte elektrische Spannung ihren Wert in der Umgebung von λ = 1 sehr stark ändert und dementsprechend ein Signal zur Verfügung steht, welches eine Abweichung von der gewünschten Betriebsweise mit stöchiometrischer Verbrennung sowohl in Richtung einer Betriebsweise mit Sauerstoffunterschuß als auch in Richtung einer Betriebsweise mit Sauerstoffüberschuß deutlich anzeigt.

Derartige Sensoren werden beispielsweise in der DE 44 01 749 A1 dargestellt.

Bei dem anderen Konzept wird ein überwiegender Betrieb des Verbrennungsmotor mit Sauerstoffüberschuß bei der Verbrennung angestrebt, weil dadurch der Kraftstoffverbrauch deutlich gesenkt werden kann. Bei einer Verbrennung mit Sauerstoffüberschuß entstehen jedoch schädliche Stickstoffoxide, die nur für eine begrenzte Zeitspanne von sog. Speicherkatalysatoren im Abgasstrang des Fahrzeugmotors aufgenommen werden können. Jeweils vor Erschöpfung der Aufnahmefähigkeit der Speicherkatalysatoren muß dann der Betrieb des Motors kurzfristig auf eine Verbrennung mit Sauerstoffunterschuß umgesteuert werden, um die zuvor im Katalysator gespeicherten Stickstoffoxide durch die nunmehr in den Abgasstrang gelangenden unvollständig verbrannten Kraftstoffbestandteile zu Stickstoff reduzieren zu können. Hier muß die Motorsteuerung also den Verbrennungsmotor ständig zwischen einer zeitlich überwiegenden Betriebsweise, bei der die Werte von λ oberhalb von 1 liegen, und einer relativ kurzzeitigen Betriebsweise, bei der die Werte von λ unterhalb von 1 liegen, intermittierend umgesteuert werden.

Für eine derartige intermittierende Betriebsweise mit stark wechselnden Werten von λ sind breitbandig arbeitende Lambda-Sonden notwendig.

Bei derartigen Lambda-Sonden ist die Nernst-Elektrode in einer gesonderten Kammer angeordnet, welche mit dem Abgasstrom über eine im Körper der Sonde angeordnete Diffusionsstrecke kommuniziert. Innerhalb dieser Kammer ist desweiteren eine innere Pumpelektrode angeordnet, die mit der Nernst-Elektrode elektrisch verbunden sein kann und im übrigen durch eine Festelektrolytschicht hindurch mit einer äußeren Pumpelektrode zusammenwirkt, die dem Abgasstrom weitestgehend unmittelbar ausgesetzt ist. Wird zwischen die beiden Pumpelektroden, die beide zumindest bereichsweise für Gase permeabel ausgebildet sind, eine externe elektrischen Spannung angelegt, so wird zwischen den Pumpelektroden ein Sauerstoff-Ionenstrom in einer von der Polarität der angelegten Spannung abhängigen Richtung und von der elektrischen Spannungsdifferenz abhängigen Stärke erzeugt, mit der Folge, daß der Diffusionsstrom der Abgase in die Diffusionskammer entsprechend gesteuert wird. Die externe elektrische Spannung zwischen den Pumpelektroden bzw. der zwischen den Pumpelektroden aufgrund des Sauerstoff-Ionenstromes auftretende elektrische Strom werden nun mittels eines Reglers so eingestellt, daß zwischen der Referenzelektrode und der Nernst-Elektrode immer eine elektrische Spannung mit vorgegebenem Sollwert aufrecht erhalten bleibt. Damit sind Polarität und Stärke des zwischen den Pumpelektroden auftretenden elektrischen Stromes ein Signal, welches mit der Zusammensetzung der Abgase und damit mit den λ-Werten korreliert ist.

Derartige Sonden werden beispielsweise in der DE 37 44 206 A1 dargestellt. Weitere Sonden sind aus der US-A-4 559 126 und der US-A-5 314 604 bekannt.

Alle vorangehend beschriebenen Sonden müssen während des Betriebes beheizt werden, um auswertbare Signale erzeugen zu können. Deshalb besitzen die Lambda-Sonden und sonstige Gassensoren regelmäßig eine elektrische Widerstandsheizung, welche im Falle eines durch ein Laminat gebildeten Sondenkörpers auf einer Schicht oder zwischen Schichten des Laminates angeordnet ist.

### Vorteile der Erfindung

Erfindungsgemäß ist vorgesehen, den Referenzluftkanal in einer drucktechnisch strukturierten Schicht bzw. Schichtanordnung auszubilden.

Dies bietet den Vorteil, daß für den Referenzluftkanal gegenüber der bisher üblichen Herstellung durch Ausstanzungen in einer grünen Keramikfolie praktisch beliebige und auch kleinteilige Formen möglich werden.

Beispielsweise können die Konturen des Referenzluftkanales an die in der Regel mäanderförmigen Konturen der elektrischen Widerstandsheizung angepaßt werden oder in Draufsicht auf die Schichtebenen von einem den Sondenkörper senkrecht zu den Schichtebenen durchsetzenden Eintrittsloch für die Abgase entfernt sein.

Darüber hinaus ist es auch möglich, die für den Zutritt der Referenzluft vorgesehene Mündung des Referenzluftkanales fächerartig aufzuteilen und/oder an die Längsränder der den Referenzluftkanal bildenden Schicht bzw. Schichtanordnung zu verlegen, wobei die Schicht bzw. die Schichten der Schichtanordnung in miteinander nicht zusammenhängende Teile zergliedert werden können, ohne daß dadurch der Fertigungsaufwand erhöht wird.

Durch die mit der drucktechnischen Herstellung möglichen geringeren Querschnitte des Referenzluftkanales sowie durch dessen vergleichsweise geringe Höhe senkrecht zu den Schichtebenen wird eine gut wärmeleitende Verbindung zwischen den Teilen des Sondenkörpers beidseitig der den Referenzluftkanal aufnehmenden Schicht bzw. Schichtanordnung geschaffen, so daß die beim Start der Heizung auftretenden Wärmespannungen innerhalb des Sondenkörpers gering bleiben bzw. eine besonders schnelle Aufheizung des Sondenkörpers möglich wird.

Erfindungsgemäß ist vorgesehen, den Referenzluftkanal mit einer porösen Masse zu füllen, so daß ein noch besserer Wärmeübergang zwischen den Laminatteilen beidseitig des Referenzluftkanales ermöglicht wird.

Die drucktechnische Herstellung des Referenzluftkanales erfolgt derart, daß auf der dem Referenzluftkanal zugewandten Seite einer die Heizung tragenden bzw. umhüllenden Schickt und/oder auf der die Referenzelektrode tragenden Seite der zwischen Referenz- und Nernst-Elektrode angeordneten Festelektrolytschicht ein Negativmuster des Referenzluftkanales mit unter Hitze aushärtenden pastösem Material, insbesondere Zirkonoxidpaste, aufgedruckt wird.

Zusätzlich ist vorgesehen, die Positivform des Referenzluftkanales mit einem unter Hitze abbrennenden oder unter Bildung einer porösen Struktur ausbrennenden pastösen Materials aufzudrucken. Auf diese Weise wird besonders sicher gewährleistet, daß der Referenzluftkanal senkrecht zu den Schichtebenen des Laminates eine reproduzierbare Höhe hat.

Zusammenfassend ist also festzustellen, daß die Erfindung den allgemeinen Gedanken verwirklicht, den Referenzluftkanal mit drucktechnischen Mitteln zu erzeugen, um praktisch beliebig filigrane Strukturen mit geringem Herstellungsaufwand gut reproduzierbar erzeugen zu können.

### Zeichnungen

Ausführungsbeispiele erfindungsgemäßer Lambda-Sonden sind in den Zeichnungen dargestellt und werden im folgenden näher erläutert. Dabei zeigt
- Fig. 1: einen der Schnittlinie I-I in Fig. 2 entsprechenden Querschnitt einer breitbandig arbeitenden Lambda- Sonde im Bereich des in den Abgasstrom hineinragenden Endes des Sondenkörpers,
- Fig. 2: eine Draufsicht entsprechend dem Pfeil II in Fig. 1 auf die Festelektrolytschicht zwischen Referenzelektrode und Nernst-Elektrode, wobei auch die Konturen der drucktechnisch auf die vorgenannte Schicht aufgetragenen Schicht für den Referenzluftkanal dargestellt sind und
- Fig. 3: einen zur Schnittebene der Fig. 1 parallelen Querschnitt des referenzluftseitigen Endes des Sondenkörpers.

### Beschreibung der Ausführungsbeispiele

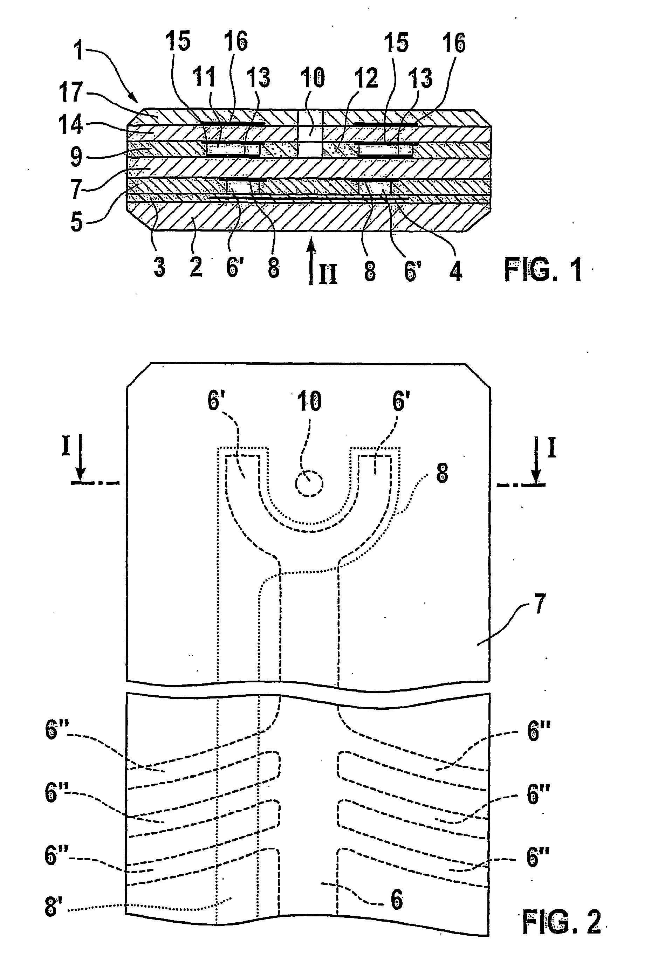

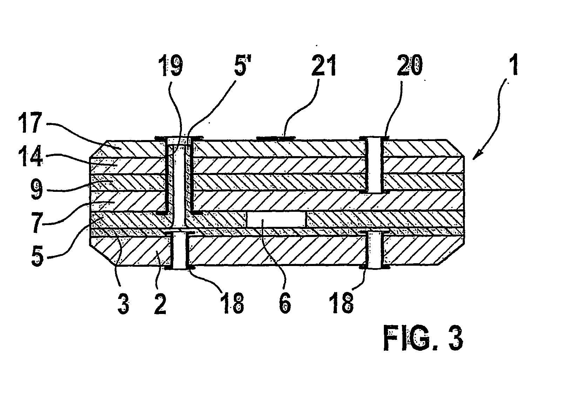

Gemäß den Fig. 1 und 3 besitzt die dargestellte Lambda-Sonde einen Körper 1, welcher erfindungsgemäß als keramisches Laminat ausgebildet ist. Die Schichten des Laminates werden erfindungsgemäß im grünen Zustand aufeinander aufgelegt bzw. aufgetragen. Durch nachfolgende Sinterung, die nach oder unter gleichzeitiger Pressung des Laminates erfolgen kann, wird erfindungsgemäß dann ein keramisch harter Körper 1 erzeugt.

Im Beispiel der Fig. 1 und 3 ist eine untere Schicht 2 in Form einer dickeren Folie aus Zirkonoxid vorgesehen. Über dieser liegt eine elektrisch isolierende Doppelschicht 3, in der eine elektrische Widerstandsheizung 4 sowie zugehörige Leiterbahnen zur elektrischen Stromzuführung eingebettet sind. Darüber liegt eine durch Siebdruck erzeugte und strukturierte Schicht 5 aus z.B. Zirkonoxidpaste. Innerhalb dieser Schicht ist ein Referenzluftkanal 6 ausgespart, dessen Grundriss in Fig. 2 beispielhaft dargestellt ist und weiter unten noch näher erläutert wird. Dieser Referenzluftkanal 6 besitzt im Bereich der Schnittebene der Fig. 1 zwei miteinander kommunizierende Endbereiche 6'.

Über der Schicht 5 liegt eine Festelektrolyt-Schicht 7 beispielsweise in Form einer Folie aus Zirkonoxid, dem Yttriumoxid beigefügt ist. Zumindest im Bereich der Endbereiche 6' des Referenzluftkanales 6 ist auf der dem Referenzluftkanal 6 zugewandten Seite der Schicht 7 bzw. zwischen den Schichten 5 und 7 eine für Gase permeable, schichtförmige Referenzelektrode 8 aus porösem Platinmaterial angeordnet, die über eine daran anschließende schichtförmige Leiterbahn 8' (vgl. Fig. 2) mit einem weiter unten erläuterten Anschlußkontakt am Körper 1 verbunden ist.

Oberhalb der Festelektrolyt-Schicht 8 liegt eine dünne, drucktechnisch strukturierte Schicht 9, welche beispielsweise wiederum aus Zirkonoxidpaste hergestellt ist. Diese Schicht 9 besitzt eine große Aussparung, welche zentrisch zu einem, den Körper 1 senkrecht zu dessen Schichten durchsetzenden Abgas-Zutrittsloch 10 angeordnet ist. Innerhalb der genannten Aussparung ist unter Freilassung eines Ringraumes 11 poröses Material 12 abgeschieden.

Im Bereich des Ringraumes 11 trägt die Festelektrolytschicht 7 eine für Gase permeable, schichtförmige Nernstelektrode 13 aus porösem Platinmaterial.

Über der Schicht 9 bzw. dem porösen Material 12 liegt eine weitere Festelektrolyt-Schicht 14, z.B. in Form einer Folie aus Zirkonoxid, dem Ytriumoxid beigemengt ist. Diese Schicht 14 trägt auf ihrer dem Ringraum 11 zugewandten Seite sowie auf ihrer vom Ringraum 11 abgewandten Seite für Gase permeable innere und äußere Pumpelektroden 15 und 16 aus zumindest bereichsweise porösem Platinmaterial, wobei diese Elektroden 15 und 16 so geformt sind, daß sie in Draufsicht auf die Schichten des Körpers 1 den Ringraum 11 zumindest im wesentlichen überdecken. Über der Schicht 14 liegt noch eine gasdurchlässige Schutzschicht 17.

Damit die Widerstandsheizung 4 sowie die verschiedenen Elektroden 8, 13, 15 und 16 elektrisch von außen zugänglich sind, sind am referenzluftseitigen Ende des Körpers 1 Kontaktfahnen (nicht dargestellt) angeordnet, die über eine oder mehrere Schichten durchsetzende Durchkontaktierungen und daran anschließende, zwischen benachbarten Schichten verlaufende, in der Regel drucktechnisch hergestellte Leiterbahnen mit der Widerstandsheizung 4 bzw. den Elektroden 8, 13, 15 und 16 verbunden sind.

Gemäß Fig. 3 sind zwei die untere Schicht 2 durchsetzende Durchkontaktierungen 18 zum Anschluß der elektrischen Widerstandsheizung 4 vorgesehen. Im dargestellten Beispiel besitzen diese Durchkontaktierungen 18 eine ringartige oder zylindrische Form.

Des weiteren ist für die Referenzelektrode 8 eine die Schichten oberhalb der Schicht 5 durchsetzende Durchkontaktierung 19 vorgesehen, die ebenfalls ringartig bzw. zylindrisch ausgebildet ist. Dabei können die Kontaktierungen 18 und 19 gleichachsig zueinander angeordnet sein.

Um trotz der geringen Schichtdicke der Schicht 5 und des dementsprechend geringen Abstandes zwischen den einander zugewandten Enden der Kontaktierung 19 und der dazu gleichachsigen Kontaktierung 18 eine sichere elektrische Isolation zu gewährleisten, wird das elektrisch isolierende Material der Schicht 5 in die Durchkontaktierung 19 hineingesogen, so daß das in Fig. 3 untere Ende der Durchkontaktierung 19 vollständig von elektrisch isolierendem Material überdeckt wird.

Eine die Schichten 9, 14 und 17 durchsetzende Durchkontaktierung 20 ist mit der Nernst-Elektrode 13 sowie der inneren Pumpelektrode 15 elektrisch verbunden. Die äußere Pumpelektrode 16 ist über eine (nicht dargestellte) Leiterbahn, welche die Schutzschicht 17 durchsetzt, mit einem Kontakt 21 verbunden.

Anhand der Fig. 2 wird nachfolgend die drucktechnische Erzeugung und Strukturierung der Schicht 5 auf der Schicht 7 erläutert.

Zunächst wird auf der folienförmigen Schicht 7 die Referenzelektrode 8 sowie die zugehörige Leiterbahn 8' aufgedruckt, typischerweise durch Siebdruck. Nachfolgend wird dann mit dem Material der Schicht 5 ein Negativbild des Referenzluftkanales 6 sowie seiner Endstücke 6' und gegebenenfalls vorhandener fächerartiger Mündungen 6" aufgetragen. Dies erfolgt ebenfalls durch Siebdruck unter Verwendung entsprechender Masken, wobei zu bemerken ist, daß damit außerordentlich filigrane und gegebenenfalls nicht zusammenhängende Strukturen erzeugt werden können.

Wenn die Beschichtung der Festelektrolyt-Schicht 7 mit dem Material der Schicht 5 vorgenommen wird, ist die Schicht 7 bereits mit den in den Fig. 1 und 3 oberhalb der Schicht 7 liegenden Schichten zusammengestapelt. Darüberhinaus ist auch bereits die Durchkontaktierung 19 angeordnet. Dementsprechend kann das Material der Schicht 5 an der Durchkontaktierung 19 in deren Innenraum eingesaugt werden, so daß dieser Innenraum zumindest im in Fig. 3 unteren Bereich von Material 5' überdeckt und damit später gegenüber der zur Durchkontaktierung 19 gleichachsigen Durchkontaktierung 18 elektrisch sicher isoliert wird. Insbesondere ist dadurch gewährleistet, daß durch Verschmutzungen keine leitende Verbindung zwischen den zueinander gleichachsigen Durchkontaktierungen 18 und 19 geschaffen werden kann.

Auf die Schicht 7 wird zusätzlich ein Positivbild des Referenzluftkanales 6 sowie seiner Endstücke 6' und Mündungen 6" mit einem Material aufgedruckt, welches bei der Sinterung des Körpers 1 eine poröse, gut gasdurchlässige Struktur bildet.

Grundsätzlich ist es auch möglich, die Schicht 3 spiegelbildlich zur Schicht 7 mit dem Material der Schicht 5 und gegebenenfalls auch mit dem für das Positivbild des Referenzluftkanales 6 sowie seiner Teile 6' und 6" vorgesehenen Material zu bedrucken. Auf diese Weise kann die Schicht 5 mit erhöhter Dicke hergestellt werden.

Die vorangehend beschriebene Lambda-Sonde funktioniert wie folgt:

Das das Abgas-Zutrittsloch 10 aufweisende Ende des Körpers 1 ist im Abgasstrom bzw. in einem mit dem Abgasstrom eines Verbrennungsmotors kommunizierenden Bereich angeordnet, während das andere Ende des Körpers 1 von Referenzluft, in der Regel von der Atmosphäre, beaufschlagt wird.

Über den Referenzluftkanal 6 bzw. seine Mündungen 6" gelangt Referenzluft bis in die Endstücke 6' des Referenzluftkanales. Über das Abgas-Zutrittsloch 10 gelangt Abgas zum porösen Material 12, durch das das Abgas in den Ringraum 11 diffundiert.

Wenn der Körper 1 mittels der elektrischen Widerstandsheizung 4 hinreichend beheizt wird, kann zwischen der Referenzelektrode 8 und der Nernst-Elektrode 13 und damit zwischen den Durchkontaktierungen 19 und 20 eine elektrische Spannung abgegriffen werden, deren Maß von den Sauerstoff-Partialdrücken innerhalb der Endstücke 6' des Referenzluftkänales sowie innerhalb des Ringraumes 11 abhängt. Hierbei wird der Effekt ausgenutzt, daß das Platinmaterial der vorgenannten Elektroden 8 und 13 die Bildung von Sauerstoff-Ionen fördert bzw. ermöglicht, mit der Folge, daß in der Festelektrolyt-Schicht 7 eine von der Konzentration der Sauerstoff-Ionen an den Elektroden 8 und 13 abhängige Ionen-Diffusion auftritt, die zu einer elektrischen Potentialdifferenz zwischen den Elektroden 8 und 13 führt.

Der Sauerstoff-Partialdruck im Ringraum 11 kann dadurch gesteuert werden, daß zwischen die Pumpelektroden 15 und 16 eine externe elektrische Spannung mit steuerbarer Polarität angelegt wird. Die entsprechende Spannungsquelle wird an die Durchkontaktierung 20 bzw. den Kontakt 21 angeschlossen. Hier wird wiederum der Effekt ausgenutzt, daß das Platinmaterial der Elektroden 15 und 16 zur Bildung von Sauerstoff-Ionen führt und dann durch die externe elektrische Spannung zwischen den Elektroden 15 und 16 ein durch die Festelektrolyt-Schicht 14 diffundierender Sauerstoff-Ionenstrom mit von der elektrischen Spannung und deren Polarität abhängiger Stärke und Richtung erzeugt wird. Dabei wird zwischen den Pumpelektroden 15 und 16 ein elektrischer Strom abgreifbar.

Nunmehr werden die elektrische Spannung und damit auch der elektrische Strom zwischen den Pumpelektroden 15 und 16 mittels eines Reglers so gesteuert, daß die zwischen der Referenzelektrode 8 und der Nernstelektrode 13 abgreifbare elektrische Spannung immer einem festgelegten Sollwert entspricht. Damit ist der zwischen den Pumpelektroden 15 und 16 abgreifbare elektrische Strom ein Maß für den Sauerstoffgehalt der Abgase relativ zur Referenzluft.

Wenn die äußere Pumpelektrode 16 gegenüber der inneren Pumpelektrode 15 auf elektrisch positivem Potential liegt, liegen Betriebsverhältnisse mit λ > 1 vor. Bei umgekehrter Polarität liegen Betriebsverhältnisse mit λ < 1 vor, wobei das Maß des zwischen den Elektroden 15 und 16 abgreifbaren elektrischen Stromes mit dem Maß von λ korreliert ist.

Die Werte von λ können in einem großen Wertebereich erfaßt werden.

Bei den eingangs erwähnten schmalbandig arbeitenden Lambda-Sonden liegt die äußere Schutzschicht 17 oberhalb der Nernst-Elektrode 13, das heißt die Schichten 9 und 14 sowie die Pumpelektroden 15 und 16 entfallen gegenüber den Darstellungen in den Figuren 1 und 3. Die zwischen den Elektroden 8 und 13 abgreifbare elektrische Spannung ist dann ein Maß für den Sauerstoff-Partialdruck der Abgase.

Unabhängig von der Bauart der Lambda-Sonden, für schmalbandige oder breitbandige Messung, kann der Referenzluftkanal 6 mit seinen Teilen 6' und 6" in der oben dargestellten Weise durch drucktechnische Abscheidung der strukturierten Schicht 5 erzeugt werden.

## Patentansprüche

1. Gassensor, insbesondere Lambda-Sonde, mit als gesintertes KeramikLaminat ausgebildetem Körper (1) und darin innerhalb einer Schicht (5) des Laminates angeordnetem Referenzluftkanal (6) auf dessen einer Seite eine im Laminat elektrisch isoliert eingebettete elektrische Widerstandsheizung (4) und auf dessen anderer Seite eine Elektrodenanordnung (8, 13; 15, 16) vorgesehen ist, welche zumindest eine innenseitig einer Begrenzungswand des Referenzluftkanals angeordnete, zumindest bereichsweise für Gase permeable Referenzelektrode (8) und eine vom zu sensierenden Gas beaufschlagbare Nernst-Elektrode (13) aufweist, die ebenfalls zumindest bereichsweise für Gase permeabel ausgebildet und von der Referenzelektrode (8) durch eine für Ionen, insbesondere Sauerstoffionen, leitfähige und permeable Festelektrolytschicht (7) getrennt ist, wobei der Referenzluftkanal (6) in einer drucktechnisch, insbesondere durch Siebdruck, strukturiert hergestellten Schicht bzw. Schichtanordnung (5) ausgebildet ist, **dadurch gekennzeichnet, dass** der Referenzluftkanal (6) mit porösem, gut gasdurchlässigem Material gefüllt ist.

2. Gassensor nach Anspruch 1, **dadurch gekennzeichnet, dass** an der elektrischen Widerstandsheizung (4) in der Umgebung des Referenzluftkanales (6) bzw. seiner Teile (6') im Vergleich zum Referenzluftkanal großflächige Bereiche der drucktechnisch strukturierten Schicht (5) zur wärmeleitenden Kopplung der Widerstandsheizung mit der Elektrolytschicht (7) zwischen Referenz- und Nernst-Elektrode (8, 13) vorgesehen sind.

3. Gassensor nach einem der Ansprüche 1 oder 2, **dadurch gekennzeichnet, dass** der Referenzluftkanal (6) in Draufsicht auf die Schichtebenen des Laminates außerhalb einer im Körper (1) angeordneten, zu den Schichtebenen senkrechten Zutrittsöffnung (10) für das zu sensierende Gas angeordnet ist.

4. Gassensor nach einem der Ansprüche 1 bis 3, **dadurch gekennzeichnet, dass** der Referenzluftkanal (6) in Draufsicht auf die Schichtebenen des Laminates außerhalb von Durchkontaktierungen (18 bis 20) angeordnet ist, welche Elektroden (8, 13, 15, 16) bzw. damit elektrisch verbundene Leiterbahnen mit außenseitig am Körper (1) angeordneten Kontakten verbinden bzw. als solche ausgebildet sind.

5. Gassensor nach einem der Ansprüche 1 bis 4, **dadurch gekennzeichnet, dass** der Referenzluftkanal (6) an zumindest einer Längsseite der den Kanal aufweisenden Schicht (5) nach außen mündet (Mündungen 6").

6. Gassensor nach einem der Ansprüche 1 bis 5, **dadurch gekennzeichnet, dass** der Referenzluftkanal (6) fächerartig angeordnete Mündungen (6") zum Eintritt der Referenzluft aufweist.

7. Gassensor nach einem der Ansprüche 1 bis 6, **dadurch gekennzeichnet, dass** ein oder mehrere Schichten durchsetzende Durchkontaktierungen (19) mit, in Draufsicht auf die Schichtebenen, ringförmigen Querschnitten innenseitig mit einer elektrisch isolierenden Beschichtung (5') versehen sind.

8. Gassensor nach Anspruch 7, **dadurch gekennzeichnet, dass** die den Referenzluftkanal aufweisende Schicht (5) aus gleichem Material wie die Beschichtung (5') der Durchkontaktierung (19) besteht.

9. Verfahren zur Herstellung eines Gassensor nach einem der Ansprüche 1 bis 8, **dadurch gekennzeichnet,**
- **dass** auf der dem Referenzkanal (6) zugewandten Seite einer die Widerstandsheizung (4) tragenden bzw. umhüllenden Schicht (3) und/oder auf der die Referenzelektrode (8) tragenden Seite der zwischen Referenz- und Nernst-Elektrode (8, 13) angeordneten Festelektrolyt-Schicht (7) ein Negativmuster des Referenzluftkanales (6) mit unter Hitze aushärtendem Material, z. B. Zirkonoxidpaste, aufgedruckt wird,
- **dass** zusätzlich ein Positivmuster des Referenzluftkanales (6) mit unter Hitze in eine poröse, gut gasdurchlässige Struktur übergehendem Material aufgedruckt wird,
- **dass** durch Aufeinanderlegen von Schichten im grünen Zustand, ein keramisches Laminat ausgebildet wird,
- **dass** durch nachfolgende Sinterung ein keramisch harter Körper ausgebildet wird und
- **dass** bei der Sinterung das Positivmuster des Referenzluftkanales (6) eine gut gasdurchlässige Struktur bildet.

10. Verfahren nach Anspruch 9 oder 10, **dadurch gekennzeichnet, dass** der Materialauftrag durch Siebdruck erfolgt.

## Claims

1. Gas sensor, in particular lambda probe, having a body (1) in the form of a sintered ceramic laminate and a reference air channel (6) arranged therein within a layer (5) of the laminate, one side of which channel is provided with an electrical resistance heater (4) which is embedded in the laminate in an electrically insulated manner, and the other side of which channel is provided with an electrode arrangement (8, 13; 15, 16) having at least one reference electrode (8), which is arranged on the inside of a boundary wall of the reference air channel and at least regions of which are permeable to gases, and a Nernst electrode (13) to which the gas to be sensed can be applied and at least regions of which are likewise permeable to gases and which is separated from the reference electrode (8) by a solid electrolyte layer (7) which conducts and is permeable to ions, in particular oxygen ions, the reference air channel (6) being formed in a layer or layer arrangement (5) which is produced in structured form using printing technology, in particular by means of screen printing, **characterized in that** the reference air channel (6) is filled with porous, highly gas-permeable material.

2. Gas sensor according to Claim 1, **characterized in that** regions of the layer (5) structured using printing technology which have a large area in comparison with the reference air channel are provided on the
electrical resistance heater (4) in the area surrounding the reference air channel (6) or parts (6') of the latter for the purpose of coupling the resistance heater to the electrolyte layer (7) in a thermally conductive manner between the reference electrode (8) and the Nernst electrode (13).

3. Gas sensor according to either of Claims 1 and 2, **characterized in that**, in a plan view of the layer planes of the laminate, the reference air channel (6) is arranged outside an access opening (10) for the gas to be sensed, which opening is arranged in the body (1) and is perpendicular to the layer planes.

4. Gas sensor according to one of Claims 1 to 3, **characterized in that**, in a plan view of the layer planes of the laminate, the reference air channel (6) is arranged outside plated-through holes (18 to 20) which connect electrodes (8, 13, 15, 16) or conductor tracks electrically connected to the latter to contacts arranged on the outside of the body (1) or are in the form of such.

5. Gas sensor according to one of Claims 1 to 4, **characterized in that** the reference air channel (6) opens to the outside (openings 6") on at least one longitudinal side of the layer (5) having the channel.

6. Gas sensor according to one of Claims 1 to 5, **characterized in that** the reference air channel (6) has openings (6") which are arranged in a fan-like manner and are intended for the entry of the reference air.

7. Gas sensor according to one of Claims 1 to 6, **characterized in that** plated-through holes (19) which penetrate one or more layers and have cross sections which are annular in a plan view of the layer planes are provided with an electrically insulating coating (5') on the inside.

8. Gas sensor according to Claim 7, **characterized in that** the layer (5) having the reference air channel consists of the same material as the coating (5') of the plated-through hole (19).

9. Method for producing a gas sensor according to one of Claims 1 to 8, **characterized**
- **in that** a negative pattern of the reference air channel (6) having material which cures under heat, for example zirconium oxide paste, is printed on the side of a layer (3) which bears or encases the resistance heater (4), which side faces the reference channel (6), and/or on the side of the solid electrolyte layer (7) arranged between the reference electrode (8) and the Nernst electrode (13), which side bears the reference electrode (8),
- **in that** a positive pattern of the reference air channel (6) having material which changes into a porous, highly gas-permeable structure under heat is additionally printed on,
- **in that** a ceramic laminate is formed by laying layers on top of one another in the green state,
- **in that** a ceramically hard body is formed by subsequent sintering, and
- **in that** the positive pattern of the reference air channel (6) forms a highly gas-permeable structure during sintering.

10. Method according to Claim 9 or 10, **characterized in that** the material is applied by screen printing.

## Revendications

1. Détecteur de gaz, en particulier sonde lambda, qui présente
un corps (1) configuré comme stratifié de céramique frittée,
un canal (6) d'air de référence sur un côté duquel un chauffage (4) par résistance électrique, isolé électriquement est incorporé dans le stratifié à l'intérieur d'une couche (5) du stratifié et sur l'autre côté duquel est prévu un système d'électrodes (8, 13; 15, 16) qui présente au moins une électrode de référence (8) dont au moins certaines parties sont perméables au gaz et qui est disposée sur le côté intérieur d'une paroi qui délimite le canal d'air de référence,
ainsi qu'une électrode de Nernst (13) sur laquelle le gaz à détecter peut être appliqué, dont au moins certaines parties sont également perméables au gaz et qui est séparée de l'électrode de référence (8) par une couche (7) d'électrolyte solide, conductrice et perméable pour les ions et en particulier pour les ions d'oxygène, le canal (6) d'air de référence étant formé dans une couche ou un ensemble (5) de couches structurés par une technique d'impression, en particulier par sérigraphie,
**caractérisé en ce que**
le canal (6) d'air de référence est rempli d'un matériau poreux présentant une bonne perméabilité vis-à-vis du gaz.

2. Détecteur de gaz selon la revendication 1, **caractérisé en ce que** dans l'environnement du canal (6) d'air de référence ou de ses parties (6'), des parties de la couche (5) structurée par une technique d'impression, de plus grande surface que le canal d'air de référence, sont prévues sur le chauffage (4) par résistance électrique pour assurer entre l'électrode de référence et l'électrode de Nernst (8, 13) un couplage conducteur de chaleur entre le chauffage par résistance et la couche d'électrolyte (7).

3. Détecteur de gaz selon l'une des revendications 1 ou 2, **caractérisé en ce que** vu en plan, le canal (6) d'air de référence est disposé sur les plans des couches du stratifié à l'extérieur d'une ouverture d'accès (10) pour le gaz à détecter disposée dans le corps (1) et perpendiculaire aux plans des couches.

4. Détecteur de gaz selon l'une des revendications 1 à 3, **caractérisé en ce que** vu en plan, le canal (6) d'air de référence est disposé sur les plans de couche du stratifié à l'extérieur de passages de contact (18 à 20) qui relient les électrodes (8, 13, 15, 16) ou des pistes conductrices qui sont reliées électriquement à des contacts disposés à l'extérieur du corps (1) ou qui constituent ces contacts.

5. Détecteur de gaz selon l'une des revendications 1 à 4, **caractérisé en ce que** le canal (6) d'air de référence débouche à l'extérieur (embouchures 6") sur au moins un côté longitudinal de la couche (5) qui présente le canal.

6. Détecteur de gaz selon l'une des revendications 1 à 5, **caractérisé en ce que** le canal (6) d'air de référence présente des embouchures (6'') d'entrée de l'air de référence disposées en éventail.

7. Détecteur de gaz selon l'une des revendications 1 à 6, **caractérisé en ce que** des passages de contact (19) qui traversent une ou plusieurs couches et de section transversale annulaire dans une vue en plan des plans de couche sont dotés intérieurement d'un revêtement électriquement isolant (5').

8. Détecteur de gaz selon la revendication 7, **caractérisé en ce que** la couche (5) qui présente le canal d'air de référence est constituée du même matériau que le revêtement (5') des passages de contact (19).

9. Procédé de fabrication d'un détecteur de gaz selon l'une des revendications 1 à 8,
**caractérisé en ce que**
sur le côté, tourné vers le canal (6) de référence, d'une couche (3) qui porte le chauffage (4) par résistance ou qui l'entoure et/ou sur le côté qui porte l'électrode de référence (8) de la couche (7) d'électrolyte libre disposée entre l'électrode de référence et l'électrode de Nernst (8, 13), un motif négatif du canal (6) d'air de référence est imprimé à l'aide d'un matériau qui durcit à la chaleur, par exemple une pâte d'oxyde de zirconium,
**en ce que** de plus un motif positif du canal (6) d'air de référence est imprimé à l'aide d'un matériau qui passe sous l'action de la chaleur en une structure poreuse et bien perméable au gaz,
**en ce qu'**un stratifié céramique est formé par applications successives de couches à l'état cru,
**en ce qu'**un corps céramique dur est ensuite formé par frittage et
**en ce que** lors du frittage, le motif positif du canal (6) d'air de référence forme une structure bien perméable au gaz.

10. Procédé selon les revendications 9 ou 10, **caractérisé en ce que** l'application de matériau s'effectue par sérigraphie.
